# EUROPÄISCHE PATENTSCHRIFT

(11) **EP 2 753 575 B1**
(45) Veröffentlichungstag und Bekanntmachung des Hinweises auf die Patenterteilung: **28.02.2018**
(21) Anmeldenummer: 12780650.3
(22) Anmeldetag: 07.09.2012
(51) Int. Cl.: C01B 21/28, B01J 8/00

(54) **VORRICHTUNG ZUR BYPASS-MINIMIERUNG IN AMMONIAK-OXIDATIONSBRENNERN GROSSTECHNISCHER ANLAGEN UND BRENNERDURCHMESSERN VON 2-7M IN NATUR- ODER ZWANGSUMLAUFKESSELN**
APPARATUS FOR MINIMIZING BYPASS IN AMMONIA OXIDATION BURNERS OF INDUSTRIAL PLANTS WITH BURNER DIAMETERS OF 2-7 M IN NATURAL- OR FORCED-CIRCULATION BOILERS
DISPOSITIF POUR RÉDUIRE AU MINIMUM LE PHÉNOMÈNE DE BY-PASS DANS DES BRÛLEURS D'OXYDATION D'AMMONIAC D'INSTALLATIONS À GRANDE ÉCHELLE AVEC DES DIAMÈTRES DE BRÛLEURS DE 2 À 7 M DANS DES CHAUDIÈRES À CIRCULATION NATURELLE OU FORCÉE

(30) Priorität: 09.09.2011 DE 102011112782
(43) Veröffentlichungstag der Anmeldung: 16.07.2014
(73) Patentinhaber: ThyssenKrupp Industrial Solutions AG, 45143 Essen (DE)
(72) Erfinder: FUCHS, Jürgen, 44139 Dortmund (DE)
(74) Vertreter: thyssenkrupp Intellectual Property GmbH
(86) Internationale Anmeldenummer: PCT/EP2012/003763
(87) Internationale Veröffentlichungsnummer: WO 2013/034303

(56) Entgegenhaltungen:
- WO-A1-03/000400
- US-A1- 2004 234 433
- US-A1- 2006 110 302

## Beschreibung

Die Erfindung betrifft ein System eines Brennerkorbes in einem Ammoniak-Oxidationsbrenner geeignet zur Minimierung von Gasschlupf und zur Minimierung von Wellenbildung von im Brennerkorb enthaltenen Mitteln, sowie zur Minimierung von Verlust von im Brennerkorb enthaltenen Mitteln und ein Verfahren zur Minimierung von Gasschlupf und zur Minimierung von Wellenbildung von im Brennerkorb enthaltenen Mitteln, sowie zur Minimierung von Verlust von im Brennerkorb enthaltenen Mitteln. D.h. es soll eine mit dem erfindungsgemäßen System eines Brennerkorbes eine Abdichtung gegen Durchfallen von Trägermaterial (Füllkörper, Katalysatormaterial) gewährleistet sein. Weiterhin soll das bekannte Phänomen der Mulden- und Hügelbildung (Wellenbildung) des Trägermaterials im Randbereich ausgelöst durch An- und Abfahrvorgänge minimiert werden, ohne dass zusätzliche Einbauten im Schüttbett nötig sind.

Salpetersäure wird durch Reaktion von NO₂ mit Wasser und Sauerstoff (Luft) erzeugt, wobei NO₂ durch Oxidation von NO erhalten wird. Dabei wird das benötigte NO meist durch Oxidation von NH₃ in einem Ammoniak-Oxidationsbrenner hergestellt.

Als Katalysatoren werden z.B. Platin/Rhodium-Netze eingesetzt. Diese werden im Brenner evtl. in Kombination mit Fängersystemen eingesetzt und auf Trägermaterialien platziert, die sich in einem Brennerkorb befinden. Diese Trägermaterialien sind meist Raschig- oder Pallringe, Berl-, Interlox- oder Torussättel und /oder Interpackkörper mit Abmessungen von etwa 5 - 200 mm. Diese bestehen aus Steinzeug, Porzellan, Glas, Katalysatormaterialien oder Edelstahl und ruhen auf Tragrosten, die beispielsweise als Lochplatten ausgestaltet sein können, deren freier Querschnitt mindestens gleich oder größer als das relative Lückenvolumen der Füllkörper ist. Dabei bilden diese Tragroste eine gasdurchlässige Bodenplatte des Brennerkorbes. Auf den Tragrosten sind meist noch weitere Stützgewebe für die Trägermaterialien vorgesehen. Die Katalysatornetze werden ebenfalls meist zusammen mit weiteren Stützgeweben mittels Einspannvorrichtungen im Brennerkorb befestigt, um ein Verrutschen zu vermeiden.

Die Tragroste werden dabei häufig auf weiteren Einbauten, die sich noch im Ammoniak-Oxidationsbrenner befinden, lose aufgestellt, so dass es keinerlei mechanische Verbindung zwischen der Brennerkorbaußenwand und den Tragrosten gibt. Derartige weitere Einbauten sind meist deshalb vorhanden, da in der Praxis häufig mit einer Kombination aus NH₃-Verbrennungselementen und Naturumlaufkesseln oder Zwangsumlaufkesseln (La Mont-Abhitzekesseln) gearbeitet wird. Dies ist von Vorteil, da eine Zersetzung des gebildeten NO vermieden werden muss und somit eine schnelle Abkühlung des erzeugten Gasgemisches erreicht werden muss. Somit befinden sich meist Rohrschlangen zur Kühlung des Gasgemisches unterhalb des Brennerkorbes im Ammoniak-Oxidationsbrenner, auf denen die Tragroste flexibel gelagert werden können.

Die Reaktionstemperatur bei der Umsetzung von Ammoniak mit Luft zu Stickoxid und Wasserdampf liegt bei bis zu 950°C und es wird bei Drücken von bis zu 10 bar gearbeitet. Dies führt dazu, dass sich der Brennerkorb entsprechend ausdehnt. Diese Ausdehnung erfolgt an Stellen, die mit Trägermaterialien bedeckt sind, also z.B. auf der gasdurchlässigen Bodenplatte, etwas zeitverzögert, da hier der Temperaturanstieg verzögert ist. Somit kommt es bei Konstruktionen von Brennerkörben, die aus einem Stück gefertigt sind, d.h. bei denen die Außenwand mit der gasdurchlässigen Bodenplatte mechanisch verbunden ist, zu einem hohen Verschleiß, da die Brennerkörbe vor allen Dingen beim An- und Abfahren hohen Spannungen im Material ausgesetzt sind. Aus diesem Grund versucht man derartige Bauweisen zu vermeiden und legt die gasdurchlässige Bodenplatte lose auf vorhandene Konstruktionen im Ammoniak-Oxidationsbrenner auf.

Bei der losen Auflegung der gasdurchlässigen Bodenplatte auf im Reaktor vorhandene Einbauten entsteht aber zwischen der umlaufenden Wand des Brennerkorbes, die im Stand der Technik zylindrisch ausgeführt ist, und der gasdurchlässigen Bodenplatte ein umlaufender Spalt. Dies passiert sobald sich die zylindrische Wand des Brennerkorbes und die gasdurchlässige Bodenplatte beginnen in unterschiedlichem Maße auszudehnen. Dies hat im weiteren durch das zwangsläufig hierdurch verursachte Absacken von Trägermaterial einen Gasschlupf zur Folge, so dass die nachgeschaltete Kühlung im Abhitzekessel nicht sofort greifen kann und es somit mit hoher Wahrscheinlichkeit zu einer Zersetzung des erzeugten NO kommt.

Außerdem besteht die Gefahr, dass durch diesen Spalt das Trägermaterial für die Katalysatornetze hindurch fällt und das Trägermaterial somit nicht mehr seine Funktion der gleichmäßigen Stützung der Katalysatornetze ausüben kann. Die Schüttstruktur des Trägermaterials wird dadurch zerstört und es kommt zur Riss- und Muldenbildung in der Schüttung. Es ist bekannt dass derartige Phänomene mit einem Verlust an Verbrennungseffizienz und einem Ammoniakschlupf in Verbindung stehen. Ein Ammoniakschlupf ist aufgrund von Umweltgesichtspunkten dringlichst zu vermeiden und eine Verminderung der Verbrennungseffizienz wirkt sich auch auf die Effizienz des Gesamtverfahrens aus, so dass letztendlich weniger Salpetersäure produziert wird.

Im Folgenden seien verschiedene Optimierungsversuche bestehender Ammoniak-Oxidationsbrenner aufgezeigt.

Die DE 102008059930 A1 lehrt einen Reaktor für katalytische, exotherme Gasphasenreaktionen enthaltend mindestens einen Katalysator, der Pt-Rh-Netze ersetzen soll. In Fig. 8 dieser Schrift ist eine hochtemperaturbeständige Unterstützung des Katalysators gezeigt, in die der Katalysator eingelegt wird. Eine derartige Stützkonstruktion für eine gasdurchlässige Bodenplatte oberhalb der Verbrennungsebene zu verwenden, ist aus konstruktiver Sicht bei der Anwendung von Platinnetzen nicht möglich. Außerdem ist es aus verfahrenstechnischer Sicht nicht praktikabel, da mit der Vorzündung des Ammoniak-Luftgemisches an den heißen, metallischen Trägerstrukturen unerwünschte Nebenprodukte entstehen würden, welche die Effizienz der NO-Produktion herabsetzen würden.

In der WO 00/40329 A ist eine Katalysatorträgerstruktur dargestellt, die über eine sich konisch zur Bodenplatte verjüngende Wand des Brennerkorbes verfügt, die fest mit dieser Wand verbunden ist. Eine derartige ausreichend dimensionierte Trägerstruktur würde den Druckverlust zwangsläufig erhöhen und wäre nicht geeignet für die erfindungsgemäße Anwendung. WO 03/000400 A1 offenbart ein System eines Brennerkorbes gemäß dem Oberbegriff von Anspruch 1 sowie ein Verfahren zur Minimierung von Gasschlupf und Wellenbildung von in einem Brennerkorb enthaltenen Mitteln gemäß dem Oberbegriff von Anspruch 5.

Es besteht also ein Bedarf die bestehenden Brennerkörbe weiter zu optimieren, um die aufgezeigten Probleme in Ammoniak-Oxidationsbrennern zu vermeiden.

Aufgabe der vorliegenden Erfindung ist es deshalb ein System eines Brennerkorbes in einem Ammoniak-Oxidationsbrenner, bei dem die Wand und die gasdurchlässige Bodenplatte nicht mechanisch miteinander verbunden sind, bereitzustellen, das einen Gasschlupf vermindert und zudem ein Verlust an im Brennerkorb befindlichen Mitteln, wie Raschig-Ringen, minimiert. Außerdem soll eine Wellenbildung von im Brennerkorb befindlichem Material verhindert werden. Des Weiteren ist es Aufgabe der Erfindung ein entsprechendes Verfahren zur Verfügung zu stellen.

Die Aufgabe der Erfindung wird gelöst durch ein System eines Brennerkorbes für einen Ammoniak-Oxidationsbrenner für großtechnische Anlagen mit Brennerdurchmessern von 2-7 m in einem Natur- oder Zwangsumlaufkessel gemäß Anspruch 1.

Mittels dieses Brennerkorbsystems soll ein umlaufender, kleiner Spalt zwischen dem gasdurchlässigen Boden und der Brennerkorbwand bei allen Betriebszuständen erzielt werden, so dass ein Durchrutschen von Trägermaterial oder Katalysator verhindert wird. Die Wellenbildung von Trägermaterial wird durch die konisch angeordnete Behälterwand minimiert. Beim Abkühlen des Reaktors wird das Trägermaterial und/oder das Katalysatormaterial bedingt durch die konisch angeordnete Behälterwand leichter wieder zurück in die Ausgangsposition nach oben gedrückt. Die Kräfte welche auf die Einbauteile durch die behinderte Wärmedehnung wirken, werden durch die konische Ausbildung der Wand soweit reduziert, dass Beschädigungen am Brennerkorbsystem auf ein vertretbares Maß reduziert werden.

Die Verankerung der Wand des Brennerkorbes im Ammoniak-Oxidationsbrenner kann derart erfolgen, dass der Brennerkorb in entsprechende Vorrichtungen im Ammoniak-Oxidationsbrenner eingehängt wird, oder beispielsweise auch, indem die Wand des Brennerkorbes über eine Flanschverbindung am Ammoniak-Oxidationsbrenner angebracht ist. Des Weiteren kann die Wand des Brennerkorbes auch am Ammoniak-Oxidationsbrenner angeschweißt sein.

Die weiteren Einbauten können wie oben beschrieben Rohrschlangen des Abhitzekessel sein. Aber auch andere Einbauten jeglicher Art, wie weitere Stützstrukturen können dazu verwendet werden, die gasdurchlässige Bodenplatte aufzunehmen. Dabei ist die Bodenplatte nicht mechanisch mit den weiteren Einbauten verbunden, sondern liegt lose auf.

Durch eine konisch zulaufende Form der Wand (1) des Brennerkorbes kann bei bestehendem Durchmesser einer gasdurchlässigen Bodenplatte, der Spalt, der sich zwischen gasdurchlässiger Bodenplatte und Wand bildet, von vornherein minimiert werden und eine entsprechende Dichtwirkung gegen Durchrutschen von Trägermaterial oder Katalysator kann erzielt werden. Dazu können wie nachfolgend gezeigt noch weitere Maßnahmen in Form von Einbauten in dem Brennerkorb vorgenommen werden, um die Dichtwirkung noch weiter zu optimieren. Im Vergleich zu herkömmlichen Brennerkörben mit zylindrischer Wand kann allerdings auch ohne weitere Einbauten eine bemerkenswerte Abdichtwirkung erzielt werden.

Es befindet sich auf der gasdurchlässigen Bodenplatte (2) eine weitere gasdurchlässiges Struktur (3). Dabei ragt die weitere gasdurchlässige Struktur (3) bevorzugt über den Spalt zwischen Wand (1) und gasdurchlässiger Bodenplatte (2). In bevorzugter Ausführungsform ist die weitere gasdurchlässige Struktur (3) dabei feinmaschiger, als die gasdurchlässige Bodenplatte (2). Bei der weiteren gasdurchlässigen Struktur handelt es sich beispielhaft um ein Netz.

Bevorzugt handelt es sich bei der gasdurchlässigen Bodenplatte um einen Wabenrost, einen Netzboden, einen Siebboden, einen Gitterboden oder um ein Lochblech. Besonders bevorzugt wird dabei die Verwendung eines Wabenrostes, da diese Art von Ausführung der Bodenplatte den Bedingungen in einem Ammoniak-Oxidationsbrenner erfahrungsgemäß am Besten gerecht wird.

Des Weiteren umfasst die vorliegende Erfindung ein Verfahren zur Minimierung von Gasschlupf und zur Minimierung von Wellenbildung von im Brennerkorb enthaltenen Mitteln, sowie zur Minimierung von Verlust von im Brennerkorb enthaltenen Mitteln eines Brennerkorbs in einem Ammoniak-Oxidationsbrenner für großtechnische Anlagen mit Brennerdurchmessern von 2-7m in einem Natur- oder Zwangsumlaufkessel gemäß Anspruch 5.

Dabei wird zur weiteren Abdichtung auf der gasdurchlässigen Bodenplatte (2) ein weiteres gasdurchlässiges Gewebe (3) aufgelegt, das über den Spalt ragt und feinmaschiger ist, als die gasdurchlässige Bodenplatte (2).

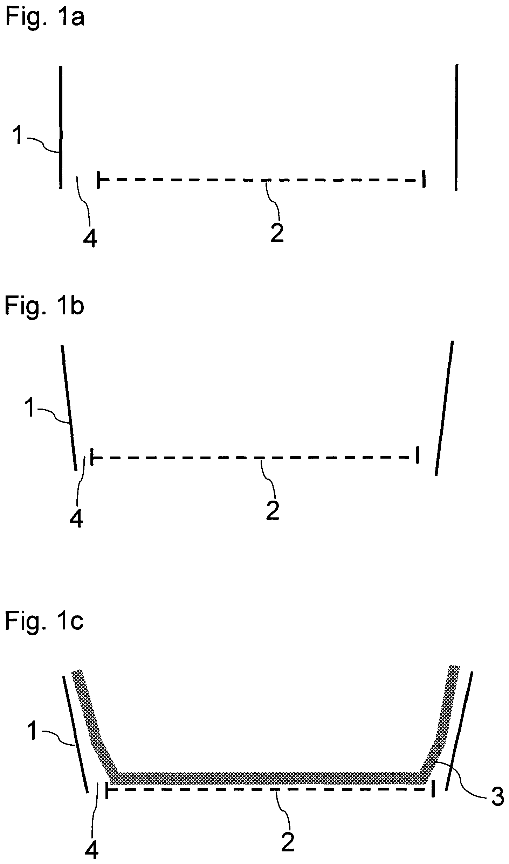

Die vorliegende Erfindung soll nachfolgend anhand der Fig. 1a bis Fig. 1c näher erläutert werden.
- Fig. 1a: Schematische Skizze eines herkömmlichen Brennerkorbes nach dem Stand der Technik
- Fig. 1b: Schematische Skizze eines Brennerkorbes mit konisch zulaufender Brennerkorbwand
- Fig. 1c: Schematische Skizze eines erfindungsgemäßen Brennerkorbes mit konisch zulaufender Brennerkorbwand mit zusätzlicher gasdurchlässiger Struktur

Fig. 1a stellt schematisch einen Brennerkorb nach dem Stand der Technik dar. Dabei bildet sich zwischen der gasdurchlässigen Bodenplatte 2 und der Wand 1 ein Spalt 4, durch den es zu einem Gasschlupf kommen kann. Zum anderen besteht das Problem, dass auf der gasdurchlässigen Bodenplatte 2 gelagertes Trägermaterial (nicht gezeigt), wie z.B. Raschig-Ringe, durch diesen Spalt 4 hindurch fallen können und somit die Schüttstruktur des Trägermaterials zerstört wird und es zur Riss- und Muldenbildung kommt. Dies ist zu vermeiden, um eine effiziente Reaktion im Ammoniak-Oxidationsbrenner zu erzielen.

Der Spalt 4 wird nun verkleinert, indem erfindungsgemäß die Wand 1 nicht zylindrisch, wie in Fig. 1a dargestellt, sondern konisch ausgeführt wird. Wie in Fig. 1b gezeigt, verengt sich dabei die Wand 1 des Brennerkorbes in einem Winkel von 5 - 20° zur Lotrechten hin zur Bodenplatte. Dies wird erfindungsgemäß derart ausgeführt, dass sich zwischen der Wand 1 und der gasdurchlässigen Bodenplatte 2 ein Spalt im Bereich von 5 bis 10 mm befindet. Damit kann die Abdichtungswirkung gegenüber einer zylindrischen Form der Wand 1 des Brennerkorbes schon drastisch verbessert werden.

Fig. 1c zeigt dann ein erfindungsgemäßes Brennerkorbsystem, in dem eine weitere gasdurchlässige Struktur auf der Bodenplatte 2 aufgelegt wird. Diese gasdurchlässige Struktur, die meist in Form eines Netzes ausgeführt ist, wird beispielhaft über den Spalt 4 hinweggeführt und ist mit Vorteil feinmaschiger als die gasdurchlässige Bodenplatte 2. Somit kann eine weitere Dichtwirkung gegenüber eventuell im Brennerkorb befindlichem Material (nicht gezeigt) erzielt werden.

In sämtlichen gezeigten Figuren liegt die gasdurchlässige Bodenplatte 2 auf Einbauten, wie Rohrschlangen, des Abhitzekessels lose auf. Es können auf diesen Einbauten auch weitere Stützstrukturen verwendet werden, die die gasdurchlässige Bodenplatte 2 aufnehmen.

Vorteile, die sich aus der Erfindung ergeben, sind:
- Für großtechnische Anwendungen, kostengünstige Bypass-Minimierung gegenüber einem Gasschlupf von NO-Produktgasen, die somit direkt über die gasdurchlässige Bodenplatte einer Abkühlung unterzogen werden können und eine Zersetzung des NOs weitestgehend unterbunden wird.
- Bypass-Minimierung gegenüber auf der gasdurchlässigen Bodenplatte gelagerten Trägermaterialien für Katalysatornetze. Damit wird eine Erhaltung der Schüttstruktur dieser Trägermaterialien sichergestellt und somit eine Riss- und Muldenbildung, durch die es ebenfalls zum Gasschlupf, z.B. von Ammoniak, kommen kann, verhindert.
- Minimierung der Kräfte durch die behinderte Wärmeausdehnung auf die Korbelemente gegenüber der zylindrischen Ausführung während der An- und Abfahrvorgänge durch die konische Form der Wand des Korbes.

### Bezugszeichenliste:

- 1: Wand
- 2: gasdurchlässige Bodenplatte
- 3: gasdurchlässige Struktur
- 4: Spalt

## Patentansprüche

1. System eines Brennerkorbes für Ammoniak-Oxidationsbrenner für grosstechnische Anlagen mit Brennerdurchmessern von 2-7 m in einem Natur- oder Zwangsumlaufkessel geeignet zur Minimierung von Gasschlupf und zur Minimierung von Wellenbildung von im Brennerkorb enthaltenen Mitteln, sowie zur Minimierung von Verlust von im Brennerkorb enthaltenen Mitteln,
wobei der Brennerkorb eine Wand (1) aufweist, die im Ammoniak-Oxidationsbrenner verankerbar ist, und der Brennerkorb eine gasdurchlässige Bodenplatte (2) aufweist, die auf Einbauten des Natur- oder Zwangsumlaufkessels plazierbar ist,
wobei sich die Wand (1) des Brennerkorbes in einem Winkel von 5 - 20° zur Lotrechten konisch, zur Bodenplatte verengt, wobei die Wand (1) und die gasdurchlässige Bodenplatte (2) nicht mechanisch miteinander verbunden sind, und wobei " sich zwischen Wand (1) und gasdurchlässiger Bodenplatte (2) bei allen Betriebszuständen des Ammoniak-Oxidationsbrenners ein umtaufender Spalt im Bereich von 5 bis 10 mm befindet,
**dadurch gekennzeichnet, dass** der Brennerkorb eine weitere gasdurchlässige Struktur (3) aufweist, die sich auf der gasdurchlässigen Bodenplatte (2) befindet.

2. System eines Brennerkorbes für Ammoniak-Oxidationsbrenner für
grosstechnische Anlagen mit Brennerdurchmessern von 2-7 m in einem Natur- oder Zwangsumlaufkessel nach Anspruch 1, **dadurch gekennzeichnet, dass** die weitere gasdurchlässige Struktur (3) über den Spalt zwischen Wand (1) und gasdurchlässiger Bodenplatte (2) ragt.

3. System eines Brennerkorbes für Ammoniak-Oxidationsbrenner für
grosstechnische Anlagen mit Brennerdurchmessern von 2-7 m in einem Natur- oder Zwangsumlaufkessel nach einem der Ansprüche 1 oder 2, **dadurch gekennzeichnet, dass** die weitere durchlässige Struktur (3) feinmaschiger ist, als die gasdurchlässige Bodenplatte (2).

4. System eines Brennerkorbes für Ammoniak-Oxidationsbrenner für
grosstechnische Anlagen mit Brennerdurchmessern von 2-7 m in einem Natur- oder Zwangsumlaufkessel nach einem der vorstehenden Ansprüche, **dadurch gekennzeichnet, dass** die gasdurchlässige Bodenplatte ein Wabenrost, ein Netzboden, ein Siebboden, ein Gitterboden oder ein Lochblech ist.

5. Verfahren zur Minimierung von Gasschlupf und zur Minimierung von
Wellenbildung von im Brennerkorb enthaltenen Mitteln, sowie zur Minimierung von Verlust von im Brennerkorb enthaltenen Mitteln eines Brennerkorbes in einem Ammoniak-Oxidationsbrenner für grosstechnische Anlagen mit
Brennerdurchmessern von 2-7m, der in einem Natur- oder Zwangsumlaufkessel vorgesehen wird,
wobei der Brennerkorb eine Wand (1) aufweist, die im Ammoniak-Oxidationsbrenner verankert wird, und der Brennerkorb eine gasdurchlässige Bodenplatte (2) aufweist, die auf Einbauten des Natur- oder Zwangsumlaufkessels platziert wird,
wobei sich die Wand (1) des Brennerkorbes in einem Winkel von 5 - 20° zur Lotrechten konisch zur Bodenplatten verengt, und wobei die Wand (1) und die gasdurchlässige Bodenplatte (2) nicht mecha-nisch miteinander verbunden sind und sich zwischen gasdurchlässiger Bodenplatte (2) und Wand (1) ein umlaufender Spalt befindet,
wobei die Breite des Spaltes bei Ausdehnung im Betrieb des Ammoniak-Oxidationsbrenners auf maximal 10 mm vergrössert wird,
**dadurch gekennzeichnet, dass** zur weiteren Abdichtung auf der gasdurchlässigen Bodenplatte (2) ein weiteres gasdurchlässiges Gewebe (3) aufgelegt wird, das über den Spalt ragt und feinmaschiger ist, als die gasdurchlässige Bodenplatte (2).

## Claims

1. System of a burner basket for ammonia oxidation burners for commercial-scale plants with burner diameters of 2-7 m in a natural or forced circulation boiler, the system being suited to minimise gas slip and to minimise surface corrugation of media contained in the burner basket as well as to minimise loss of media contained in the burner basket,
with the burner basket being provided with a wall (1) which can be fixed to the ammonia oxidation burner, and the burner basket being provided with a gas-permeable bottom plate (2) which can be arranged on top of internal components of the natural or forced circulation boiler, the wall (1) of the burner basket being tapered conically towards the bottom plate at an angle of 5 - 20° to the perpendicular, the wall (1) and the gas-permeable bottom plate (2) not being connected mechanically, and a circumferential gap in the range of 5 to 10 mm being present between the wall (1) and the gas-permeable bottom plate (2) under all operating conditions of the ammonia oxidation burner,
**characterised in that** the burner basket has an additional gas-permeable structure (3) on top of the gas-permeable bottom plate (2).

2. System of a burner basket for ammonia oxidation burners for commercial-scale plants with burner diameters of 2-7 m in a natural or forced circulation boiler according to claim 1, **characterised in that** the additional gas-permeable structure (3) extends over the gap between wall (1) and gas-permeable bottom plate (2).

3. System of a burner basket for ammonia oxidation burners for commercial-scale plants with burner diameters of 2-7 m in a natural or forced circulation boiler according to either of claims 1 and 2, **characterised in that** the additional permeable structure (3) is of a smaller mesh size than the gas-permeable bottom plate (2).

4. System of a burner basket for ammonia oxidation burners for commercial-scale plants with burner diameters of 2-7 m in a natural or forced circulation boiler according to one of the above claims, **characterised in that** the gas-permeable bottom plate is a honeycomb-structured grid, a mesh plate, a sieve plate, a grid plate or a perforated plate.

5. Method for minimising gas slip and for minimising surface corrugation of media contained in the burner basket as well as for minimising the loss of media contained in the burner basket of a burner basket in an ammonia oxidation burner for commercial-scale plants with burner diameters of 2-7 m, which is provided in a natural or forced circulation boiler,
with the burner basket being provided with a wall (1) which is fixed to the ammonia oxidation burner, and the burner basket being provided with a gas-permeable bottom plate (2) arranged on top of internal components of the natural or forced circulation boiler, with the wall (1) of the burner basket being tapered conically towards the bottom plate at an angle of 5 - 20° to the perpendicular, and with the wall (1) and the gas-permeable bottom plate (2) not being connected mechanically and a circumferential gap being present between gas-permeable bottom plate (2) and wall (1), the width of the gap enlarging to a maximum of 10 mm with expansion during operation of the ammonia oxidation burner,
**characterised in that** an additional gas-permeable fabric (3) is arranged on top of the gas-permeable bottom plate (2) to improve the sealing effect, the fabric extending over the gap and being of a smaller mesh size than the gas-permeable bottom plate (2).

## Revendications

1. Système d'un panier de brûleur pour un brûleur d'oxydation d'ammoniac pour des installations à grande échelle avec des diamètres de brûleurs de 2 à 7 m dans une chaudière à circulation naturelle ou forcée convenant pour minimiser les fuites de gaz et pour minimiser la formation de vagues dans des milieux contenus dans le panier de brûleur, ainsi que pour minimiser les pertes de milieux contenus dans le panier de brûleur,
dans lequel le panier de brûleur présente une paroi (1), qui peut être ancrée dans le brûleur d'oxydation d'ammoniac, et le panier de brûleur présente une plaque de fond (2) perméable au gaz, qui peut être placée sur des agencements de la chaudière à circulation naturelle ou forcée,
dans lequel la paroi (1) du panier de brûleur converge en forme de cône vers la plaque de fond avec un angle de 5 à 20° par rapport à la verticale,
dans lequel la paroi (1) et la plaque de fond perméable au gaz (2) ne sont pas liées mécaniquement l'une à l'autre, et
dans lequel il se trouve entre la paroi (1) et la plaque de fond perméable au gaz (2) dans tous les états de fonctionnement du brûleur d'oxydation d'ammoniac une fente périphérique de l'ordre de 5 à 10 mm,
**caractérisé en ce que** le panier de brûleur présente une autre structure perméable au gaz (3), qui se trouve sur la plaque de fond perméable au gaz (2).

2. Système d'un panier de brûleur pour un brûleur d'oxydation d'ammoniac pour des installations à grande échelle avec des diamètres de brûleurs de 2 à 7 m dans une chaudière à circulation naturelle ou forcée selon la revendication 1, **caractérisé en ce que** l'autre structure perméable au gaz (3) s'étend au-dessus de la fente entre la paroi (1) et la plaque de fond perméable au gaz (2).

3. Système d'un panier de brûleur pour un brûleur d'oxydation d'ammoniac pour des installations à grande échelle avec des diamètres de brûleurs de 2 à 7 m dans une chaudière à circulation naturelle ou forcée selon une des revendications 1 ou 2, **caractérisé en ce que** l'autre structure perméable (3) présente des mailles plus fines que la plaque de fond perméable au gaz (2).

4. Système d'un panier de brûleur pour un brûleur d'oxydation d'ammoniac pour des installations à grande échelle avec des diamètres de brûleurs de 2 à 7 m dans une chaudière à circulation naturelle ou forcée selon l'une quelconque des revendications précédentes, **caractérisé en ce que** la plaque de fond perméable au gaz est une grille en nid d'abeilles, un fond en filet, un fond en treillis, un fond en grille ou une tôle perforée.

5. Procédé pour minimiser les fuites de gaz et pour minimiser la formation de vagues dans des milieux contenus dans le panier de brûleur, ainsi que pour minimiser les pertes de milieux contenus dans le panier de brûleur d'un panier de brûleur dans un brûleur d'oxydation d'ammoniac pour des installations à grande échelle avec des diamètres de brûleur de 2 à 7 m, qui est prévu dans une chaudière à circulation naturelle ou forcée,
dans lequel le panier de brûleur présente une paroi (1), que l'on ancre dans le brûleur d'oxydation d'ammoniac, et le panier de brûleur présente une plaque de fond (2) perméable au gaz, que l'on place sur des agencements de la chaudière à circulation naturelle ou forcée,
dans lequel la paroi (1) du panier de brûleur converge en forme de cône vers la plaque de fond avec un angle de 5 à 20° par rapport à la verticale, et
dans lequel la paroi (1) et la plaque de fond perméable au gaz (2) ne sont pas liées mécaniquement l'une à l'autre, et il se trouve entre la plaque de fond perméable au gaz (2) et la paroi (1) une fente périphérique,
dans lequel on agrandit la largeur de la fente par dilatation pendant le fonctionnement du brûleur d'oxydation d'ammoniac à 10 mm au maximum,
**caractérisé en ce que** l'on dépose sur la plaque de fond perméable au gaz (2), pour améliorer l'étanchéité, un autre tissu perméable au gaz (3), qui s'étend au-dessus de la fente et qui présente des mailles plus fines que la plaque de fond perméable au gaz (2).
